# EUROPÄISCHE PATENTSCHRIFT

(11) **EP 1 459 861 B1**
(45) Veröffentlichungstag und Bekanntmachung des Hinweises auf die Patenterteilung: **04.06.2008**
(21) Anmeldenummer: 04005209.4
(22) Anmeldetag: 05.03.2004
(51) Int. Cl.: B29C 43/36, B29C 43/00, B29C 31/00, F16D 69/00, B29C 43/42, B29C 33/00, B29C 33/30

(54) **Vorrichtung und Verfahren zur Herstellung von Hohlkörpern**
Device and process for making hollow articles
Dispositif et procédé de fabrication des corps creux

(30) Priorität: 19.03.2003 DE 10312159
(43) Veröffentlichungstag der Anmeldung: 22.09.2004
(73) Patentinhaber: AUDI AG, 85045 Ingolstadt (DE)
(72) Erfinder: Patschicke, Norbert, 86153 Augsburg (DE); Nixdorf, Reinhard, verstorben (DE)
(74) Vertreter: Deckers, Hellmuth Alexander

(56) Entgegenhaltungen:
- EP-A- 0 788 468
- DE-A- 19 834 571
- DE-C- 10 148 658
- GB-A- 767 387
- GB-A- 784 124
- PATENT ABSTRACTS OF JAPAN Bd. 0082, Nr. 53 (M-339), 20. November 1984 (1984-11-20) & JP 59 129111 A (TOYOTA JIDOSHA KK), 25. Juli 1984 (1984-07-25)
- PATENT ABSTRACTS OF JAPAN Bd. 0145, Nr. 56 (M-1057), 11. Dezember 1990 (1990-12-11) & JP 2 236203 A (ATSUGI UNISIA CORP), 19. September 1990 (1990-09-19)

## Beschreibung

Die Erfindung betrifft ein Verfahren zur Herstellung von Hohlkörpern, insbesondere Hohlkörpern mit mindestens einer Spiegelebene. Insbesondere eignet sich das Verfahren für Preßgut aus gebundenen faserverstärkten präkeramischen Massen.

Das Dokument GB 767 387 A betrifft ein Verfahren zur Herstellung von Gegenständen aus thermisch härtbaren Formmassen, wobei in die Preßform Metalleinsätze eingebracht werden, die Ausnehmungen und Profile als Abdruck formen, beispielsweise bei Zahnrädern mit Durchbrüchen für die Achse und Befestigungslöcher. Aus der JP 59-129 111 A sind Bremsbeläge bekannt, die in einer Form gepreßt werden, wobei ein Preßstempel eine nadelförmige Erhebung aufweist, die in dem Belagpreßling zu einem von dessen Oberfläche ausgehenden Loch führt. Aus der Offenlegungsschrift DE 198 34 571 ist ein Verfahren bekannt, bei dem ein Grünling aus einer Preßmasse enthaltend Fasern und ein carbonisierebares Bindemittel verpreßt und anschließend pyrolysiert wird, wobei dem Grünling Metall oder Silicium enthaltende Kerne beigegeben werden, die als Quelle bei einer nachfolgenden Schmelzinfiltration dienen. In der EP 0 788 468 A1 ist ein Verfahren zur Herstellung einer Reibeinheit beschrieben, die in definierten Außen- und Innenbereichen Ausnehmungen oder Hohlräume aufweist, wobei beim Pressen des Grünlings Kerne eingebracht werden, deren Abmessungen den zu bildenden Hohlräumen entsprechen. Aus der Patentschrift DE 101 48 658 C1 ist ein Verfahren zur Herstellung von Hohlkörpern aus faserverstärkten keramischen Materialien bekannt, bei dem Kerne eingesetzt werden, die oberhalb der Härtungstemperatur der Preßmasse unzersetzt schmelzen.

Bei der Herstellung von Hohlkörpern durch Pressen werden üblicherweise mindestens zwei Teile in separaten Schritten gepreßt, die anschließend zu dem gewünschten Hohlkörper beispielsweise durch Kleben oder Fügen verbunden werden. Dabei entstehen häufig in den die Hohlräume begrenzenden Bereichen Zonen mit gegenüber den benachbarten Bereichen unterschiedlicher Festigkeit. Häufig ist die Festigkeit in diesen Bereichen geringer als in den benachbarten Bereichen. Aufgrund der Geometrie des Hohlkörpers kann sogar die Anforderung bestehen, daß in den die Hohlräume begrenzenden Bereiche eine besonders hohe Festigkeit verlangt wird, wobei die Geometrie der Teile des Hohlkörpers nicht derart abgeändert werden kann, daß die Klebe- oder Fügestelle an eine andere Stelle des gewünschten Hohlkörpers durch Änderung der Konstruktion der Teile verlagert werden kann. Dies ist beispielsweise der Fall, wenn die Stege oder Wände, die den Hohlräumen unmittelbar benachbart sind, eine tragende Funktion für den gewünschten Hohlkörper haben.

Es besteht daher die Aufgabe, ein Verfahren bereitzustellen zur Fertigung von Hohlkörpern, die in den den Hohlräumen benachbarten mit Material gefüllten Zonen keine reduzierte Festigkeit aufweisen.

Gegenstand der Erfindung ist daher ein Verfahren zur Herstellung von

Hohlkörpern, umfassend die Schritte
a Einlegen einer Platte in einen bündig anliegenden Rahmen bestehend aus Innen- und Außenrahmen, wobei die Platte eine ebene Bodenfläche und eine strukturierte (Konturplatte) oder ebene (Deckplatte) Oberseite aufweist
b Einlegen von gegebenenfalls miteinander verbundenen Kernen, die die Größe und Gestalt der zu bildenden Hohlräume aufweisen, auf die ebene (Deckplatte) oder strukturierte (Konturplatte) Oberseite der Platte, wobei die Struktur der Oberseite der Konturplatte Vertiefungen aufweist, die der Gestalt der Kerne entsprechen und zumindest 20 % der Höhe der Kerne ausmachen,
c Befüllen der Hohlräume zwischen den Kernen mit einer Formmasse A derart, daß die Hohlräume mindestens bis zur Höhe der oberen Begrenzungsflächen der Kerne gefüllt sind,
d Beschichten der freiliegenden Oberfläche mit weiterer Formmasse **B** sowie Abdecken der Schicht der Formmasse **B** mit einer bündig in den Rahmen passenden Deckplatte mit ebenen Boden- und Deckflächen,
e Wenden des Gebildes aus dem Schritt d derart, daß die Deckplatte aus Schritt d nach unten zu liegen kommt,
f Abheben der Platte aus Schritt a und Beschichten der freiliegenden Fläche mit Formmasse B,
g erneutes Aufsetzen der in Schritt fabgehobenen Deckplatte oder einer weiteren Deckplatte, falls in Schritt a eine Konturplatte eingesetzt wurde, auf die im Schritt f aufgetragene Schicht der Formmasse B und Verpressen durch Aufsetzen auf einen Pressentisch und Absenken mindestens eines Preßstempels
h Entformen und Entnehmen des aus Kernen und verdichteten Formmassen bestehenden Preßlings
i thermische Behandlung des Preßlings, bei der das Material der Kerne sich zersetzt oder schmilzt.

Geeignet für das Verfahren ist eine Vorrichtung, umfassend eine bevorzugt rotationssymmetrische Preßform mit einem Außen- und einem Innenrahmen, mindestens einer Deckplatte und gegebenenfalls einer Konturplatte, wobei die Platten bündig in den Innen- und Außenrahmen passen, sowie Kerne, die in die Preßform eingebracht sind. Bevorzugt weist die genannten Teile umfassende Vorrichtung im befüllten und fertig montierten Zustand mindestens eine Spiegelebene auf.

Dabei sind Außen- und Innenrahmen bevorzugt in der Form von Hohlzylindern ausgebildet In einer weiteren bevorzugten Ausführungsform ist der hohlzylinderförmige Anßenrahnen so ausgebildet, daß im unteren Teil, insbesondere im unteren Drittel, der Innendurchmesser um einen Betrag von 0,1 bis 10 mm geringer ist als im oberen Teil, dadurch entsteht im Inneren eine Stufe. In derselben Höhe ist ebenso bevorzugt der Außendurchmesser des hohlzylinderförmigen Innenrahmens um bevorzugt denselben Betrag größer als im oberen Teil. Beide umlaufenden Stufen bilden so eine Auflage. Die Dicke der Rahmen beträgt bevorzugt 5 bis 30 mm.

Die Deck- und die Bodenplatte sind im Fall von rotationssymmetrischen Rahmen Kreisringscheiben, deren Außendurchmesser dem Innen durchmesser des Außenrahmens entspricht, und deren Innendurchmesser dem Außendurchmesser des Innenrahmens entspricht. Entsprechend sind die Boden- und Deckplatte geformt, wenn anstelle eines roationssymmetrischen Rahmens beispielsweise ein vieleckförmiger Rahmen gewählt wird.

Die Konturplatte entspricht in den Abmessungen (Innen- und Außendurchmesser im Fall eines rotationssymmetrischen Rahmens) der Deck- oder Bodenplatte, ihre Dicke oder Höhe ist jedoch größer. Die Hohlräume des Hohlkörpers werden durch Kerne gebildet, die in die Preßform eingelegt werden. Bei der Konturplatte weist eine Deckfläche, die Oberseite, Vertiefungen auf, die der Gestalt der Kerne entsprechen und zumindest 20 % der Höhe der Kerne ausmachen.

Die Formmassen A und B enthalten Bindemittel ausgewählt aus wärmeformbaren (thermoplastischen) und wärmehärtbaren (duroplastischen), bevorzugt carbonisierbaren Stoffen und gegebenenfalls Füllstoffe oder Verstärkungsfasern ausgewählt aus natürlichen und synthetischen Fasern, wie Wolle, Baumwolle, Flachs, Sisal, Holzfasern, Polyesterfasern, Polyacrylnitrilfasern und Polyamidfasern, Kohlenstoffasern, nichtoxidischen anorganischen Fasern wie Siliciumcarbidfasern, Siliciumnitridfasern, Bornitridfasern und Borcarbidfasern, oxidischen anorganischen Fasern wie Aluminiumoxidfasern und Zirkonoxidfasern. Geeignete Füllstoffe sind insbesondere Refraktärmaterialien wie Siliciumcarbid, Siliciumnitrid, Bornitrid, Borcarbid, Titancarbid, Aluminiumoxid und Siliciumdioxid, jeweils in Form von Pulvern.

Geeignete thermoplastische Materialien sind Kunststoffe wie beispielsweise Polyolefine, Styrol(co)polymere, Vinyl(co)polymere, Polyester, Polyamide, Polycarbonat, Polyoxymethylen, Polyurethane, Polyimide, Polysulfone, Polyäthersulfone und Polyätherketone sowie insbesondere die als Schmelzkleber bekannten Materialien. Geeignete duroplastische Materialien sind beispielsweise Epoxidharze, Phenolharze und Furanharze. Als "carbonisierbar" werden solche Stoffe bezeichnet, die beim Erhitzen unter Sauerstoffausschluß bei 750 bis 1300 °C einen Rückstand von mindestens 10 % der Masse des eingesetzten Stoffes an Kohlenstoff bilden. Bevorzugt werden als carbonisierbare Stoffe Peche und Kunstharze wie Phenol- und Furanharze.

Die Zusammensetzungen der Formmassen **A** und **B** können gleich oder verschieden sein; im Fall einer unterschiedlichen Zusammensetzung ist es bevorzugt, daß die Formmasse A Verstärkungsfasern, und gegebenenfalls einen höheren Anteil an Verstärkungsfasern enthält als die Formmasse B. Es ist weiter bevorzugt, in den Formmassen unterschiedliche Faserlängen einzusetzen, wobei die mittlere Faserlänge der Formmasse **A** besonders bevorzugt länger ist als die in der Formmasse B.

Werden carbonisierbare Stoffe als Bindemittel eingesetzt, so wird der Preßling in bevorzugter Weise nach dem Entformen durch Erhitzen unter Sauerstoffausschluß carbonisiert und in einer weiteren bevorzugten Ausführungsform danach mit flüssigem Silicium oder flüssigen Metallen oder Metallegierungen enthaltend Massenanteile von mindestens 10 % an Silicium infiltriert, wobei sich zumindest ein Teil des Kohlenstoffs mit den Metallen bzw. dem Silicium zu den entsprechenden Carbiden verbindet.

Das Verfahren wird durch die Zeichnungen erläutert, die jeweils rotationssymmetrische Preßformen darstellen. Dabei zeigen
- Fig. 1: eine Vorrichtung für ein Verfahren gemäß der Erfindung, wobei eine mit Ausnehmungen versehene Konturplatte als Teil der Preßform und als Einlegeform für die Kerne verwendet wird,
- Fig. 2: eine Vorrichtung für ein Verfahren gemäß der Erfindung, wobei eine mit Ausnehmungen versehene Konturplatte als Teil der Preßform und als Einlegeform für die Kerne verwendet wird, und die verwendete Konturplatte zusätzlich Stufen in den Stegen aufweist,
- Fig. 3: eine Vorrichtung für ein Verfahren gemäß der Erfindung, wobei eine ebene Grundplatte als Teil der Preßform und Auflage für die Kerne verwendet wird, und
- Fig. 4: eine Vorrichtung für ein Verfahren gemäß der Erfindung, wobei eine ebene Grundplatte als Teil der Preßform verwendet wird und die Kerne durch einen entsprechenden Rücksprung im Rahmen der Preßform in einem einstellbaren Abstand von der Grundplatte gehalten werden.

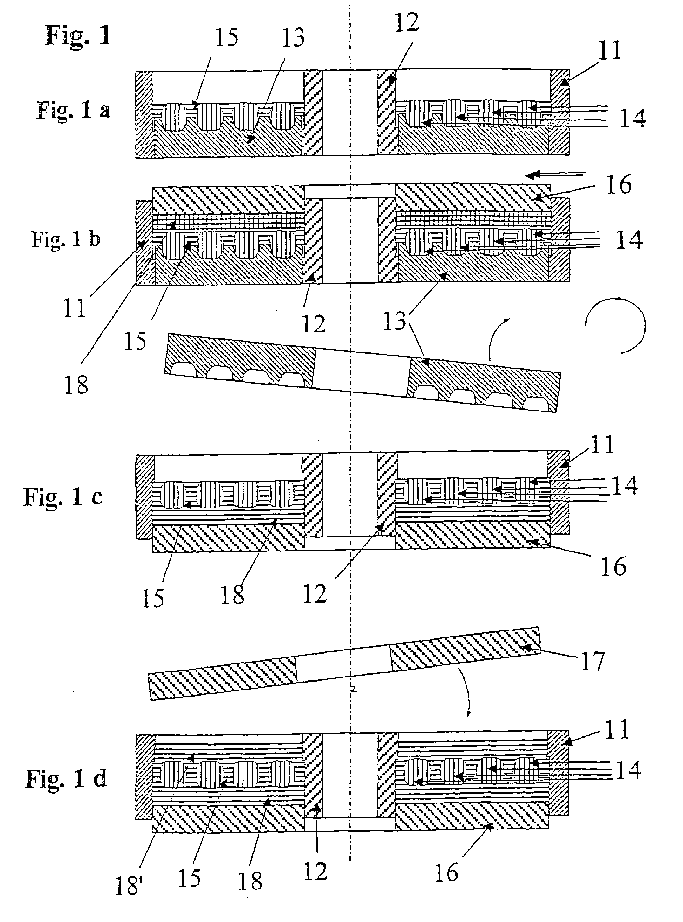

Im einzelnen erläutert die Fig. 1 ein erfindungsgemäßes Preßverfahren, wobei in der Fig. 1a ein Schnitt durch ein aus einem Außenrahmen 11, einem Innenrahmen 12, einer Konturplatte 13 und Kernen 14 bestehende Preßform dargestellt ist, in die die Formmasse A (15) so gefüllt wird, daß sie mit der Oberfläche der Kerne 14 eine Ebene bildet. Dabei wird ca. 50 % der Höhe des Zwischenraums zwischen den Kernen mit Formmasse gefüllt. Anschließend wird die freie Oberfläche mit der Formmasse **B** (18) beschichtet, dann wird eine Deckplatte 16 aufgelegt, die bündig mit innerem und äußerem Preßrahmen abschließt (Fig. 1b). Das Gebilde wird um 180° gewendet, so daß die Konturplatte 13 nach oben zu liegen kommt. Diese Konturplatte 13 wird abgenommen, der nun freie Raum zwischen den Kernen wird mit weiterer Formmasse A (15) und anschließend die freie Oberfläche mit der Formmasse B (18') beschichtet und nach Auflegen einer zweiten Deckplatte 17 auf einen Pressentisch gebracht und durch Absenken eines Preßstempels (Fig. 1 d) verdichtet. Aus Gründen der Übersichtlichkeit ist die Formmasse B nur in der Figur 1b durch eine andere Schraffierung kenntlich gemacht.

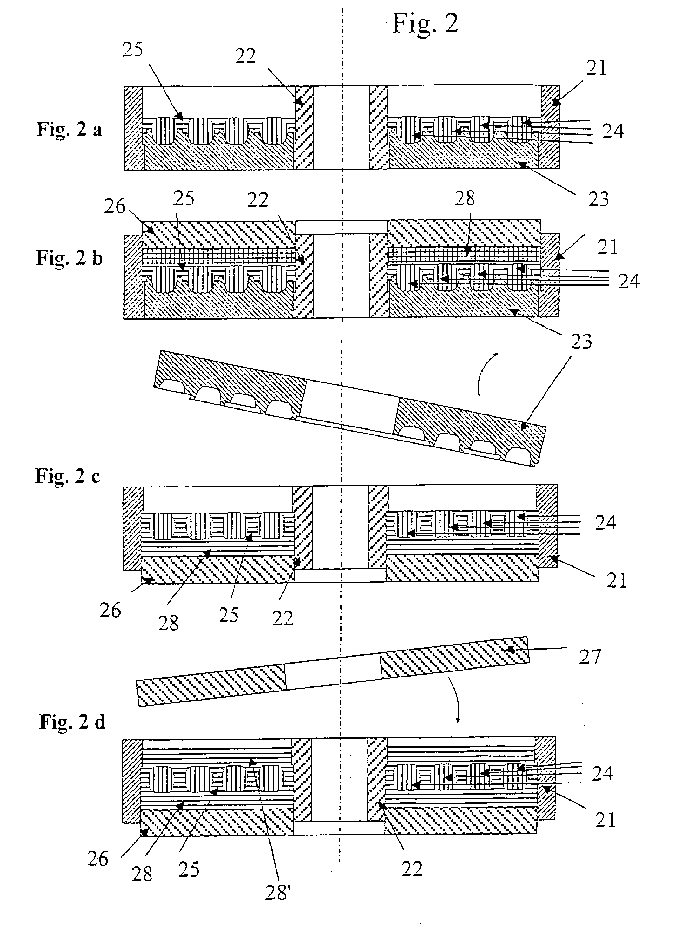

In der Fig. 2 ist in der Zeichnung 2a ein Schnitt durch ein aus einem Außenrahmen 21, einem Innenrahmen 22, einer Konturplatte 23, die in diesem Fall in der Trennebene Stufen aufweist, und Kernen 24 bestehende Preßform dargestellt, in die die Formmasse A (25) so gefüllt wird, daß sie mit der Oberfläche der Kerne 24 eine Ebene bildet. Anschließend wird die freie Oberfläche mit der Formmasse **B** (28) beschichtet, dann wird eine Platte 26 aufgelegt, die bündig mit dem Innen- und Außenrahmen abschließt (Fig. 2b). Aus Gründen der Übersichtlichkeit ist die Formmasse **B** nur in der Figur 2b durch eine andere Schraffierung kenntlich gemacht. Danach wird das Gebilde um 180° gewendet, so daß die Bodenplatte 23 nach oben zu liegen kommt. Diese Bodenplatte 23 wird abgenommen, der freie Raum zwischen den Kernen wird mit weiterer Formmasse **A** (25) und anschließend die freie Oberfläche mit der Formmasse **B** (28') beschichtet und nach Auflegen einer weiteren Deckplatte 27 (Fig. 2c) auf einen Pressentisch gebracht und durch Absenken eines nicht dargestellten Preßstempels verdichtet (Fig. 2d).

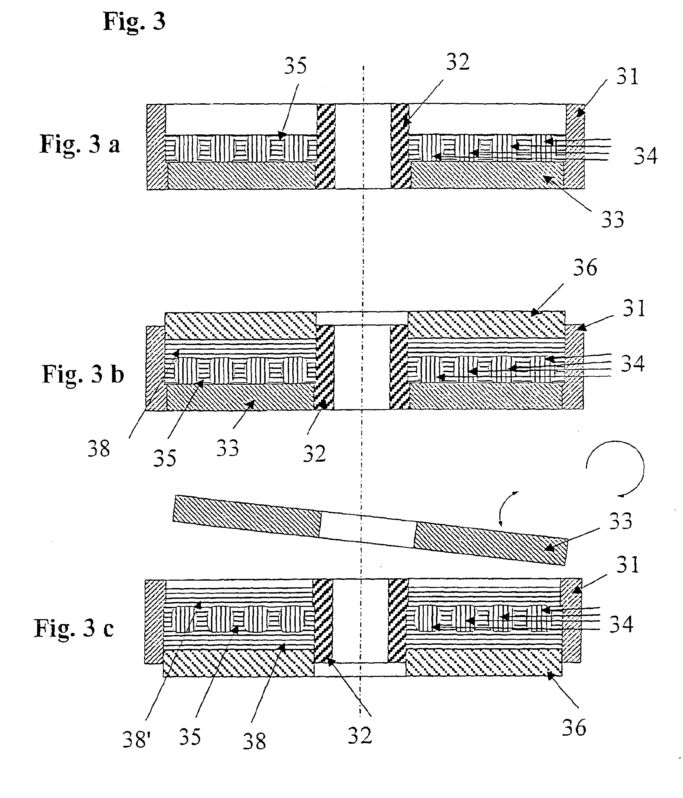

In der Fig. 3 ist in der Zeichnung 3a ein Schnitt durch ein aus einem Außenrahmen 31, einen Innenrahmen 32, einer beidseitig ebenen Bodenplatte 33 und Kernen 34 bestehende Preßform dargestellt, in die die Formmasse **A** (35) so befüllt wird, daß sie mit der Oberfläche der Kerne 34 eine Ebene bildet. Anschließend wird die freie Oberfläche mit der Formmasse **B** (38) beschichtet, dann wird eine Deckplatte 36 aufgelegt, die bündig mit Innen- und Außenrahmen abschließt (Fig. 3b). Die Formmasse **B** ist hier nicht durch eine andere Schraffierung als die Formmasse A kenntlich gemacht. Das Gebilde wird um 180° gewendet, so daß die Bodenplatte 33 nach oben zu liegen kommt. Diese Bodenplatte 33 wird abgenommen, die freie Oberfläche wird mit der Formmasse **B** (38') beschichtet und nach erneutem Auflegen der Bodenplatte 33 (Fig. 3c) auf einen Pressentisch gebracht und durch Absenken eines nicht dargestellten Preßstempels verdichtet.

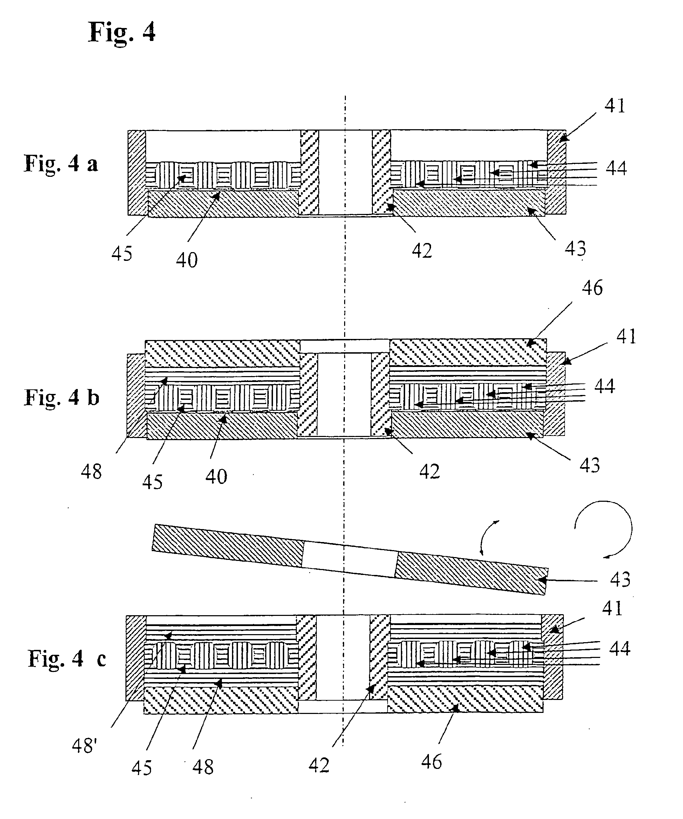

Fig. 4 zeigt im Schnitt eine bevorzugte Ausführungsform, bei der mehrere Kerne 44 durch einen inneren und einen äußeren Kreisring mechanisch verbunden und fixiert sind. Äußerer und innerer Kreisring der Kerne sitzen auf einem Vorsprung in dem Außenrahmen 41 und dem Innenrahmen 42 und werden in bevorzugter Weise beispielsweise mit (nicht dargestellten) Sprengringen fixiert. Die ebene Bodenplatte 43 schließt nicht unmittelbar mit den unteren Rändern der Kerne 44 ab. Beim Befüllen entsteht so ein Spalt zwischen der Bodenplatte 43 und den mit den in der Zeichnung nicht dargestellten Kreisringen verbundenen Kernen 44. Dabei sind diese Kreisringe bevorzugt so ausgeführt, daß ein Kreisring auf der Stufe des Innenrahmens und ein Kreisring auf der Stufe des Außenrahmens aufsitzt. Die Kerne sind so gestaltet, daß die Breite der durch sie im Preßling geformten Stege in der Mittelebene am geringsten ist. Die Fließvorgänge beim Befüllen bewirken, daß ein Teil der Formmasse **A** (45) in den Spalt zwischen Bodenplatte 43 und der durch die unteren Ränder der Kerne 44 gebildeten Ebene gedrückt wird. Dabei werden die Verstärkungsfasern 40 in Richtung der (in der Figur strichpunktiert dargestellten) Symmetrieachse der Form aufgerichtet (Fig. 4a) und ragen zum Teil über die untere Begrenzungsfläche hinaus. Wie bei den anderen Ausführungsformen wird nun Formmasse **B** (48) auf die durch die Oberfläche der Kerne und die dazwischen gefüllte Formmasse A (45) gebildete Fläche gefüllt, eine Deckplatte (46) aufgelegt (Fig. 4 b), um 180° gewendet, die Bodenplatte 43 abgehoben, und die freie Fläche mit der Formmasse **B** (48') beschichtet. Die Faserorientierung mit herausstehenden Faserenden verbessert die Bindung zwischen den aus den gegebenenfalls unterschiedlichen Formmassen **A** und **B** gebildeten Teilen bei dem in Fig. 4c dargestellten Auffüllen der Form auf der freien Oberfläche der Kerne und der Formmasse **A** (45) mit der Formmasse **B** (48'). Anschließend wird die Platte 43 wieder aufgesetzt, die gefüllte Form wird auf einen Pressentisch gelegt und ihr Inhalt wird durch Absenken eines nicht dargestellten Preßstempels verdichtet.

Die derart gepreßten Körper werden dann einer thermischen Behandlung unterworfen, bei der das Material der Kerne sich zersetzt oder schmilzt, wobei im gepreßten Körper bevorzugt Kanäle eingeformt sind, durch die die gebildete Schmelze oder das beim Zersetzen gebildete Gas aus dem Körper entweichen kann.

Gemäß einer Ausführungsform der Erfindung werden die Kerne aus schmelzbaren Materialien hergestellt, die aus thermoplastischen und rückstandsfrei pyrolysierbaren Polymeren (Kunststoffen) ausgewählt sind, im weiteren auch Thermoplastkerne genannt. Erfindungsgemäß wird das thermoplastische Material für den Kern so gewählt, daß dessen Schmelzpunkt oberhalb der Härtungstemperatur des Formgebungsverfahrens für den aus den Formmassen gebildeten Grünkörper, typischerweise im Bereich von 120 bis 300 °C, aber deutlich unterhalb der Carbonisierungstemperatur der gepreßten und ausgehärteten Grünkörper liegt. Üblicherweise liegt der Schmelzpunkt bei mindestens 150 °C, bevorzugt bei mindestens 180 °C und besonders bevorzugt zwischen 220 °C und 280 °C. Werden als Binder für die Formmassen **A** und **B** Phenolharze gewählt, so liegt der Schmelzpunkt des Thermoplasten beispielsweise bevorzugt über 150 °C. Für die bevorzugte Preßformgebung und Heiß-Härtung der Binder werden an den Thermoplastkern hohe Anforderungen an die Wärmeformbeständigkeit gestellt. Die Wärmeformbeständigkeitstemperatur (bestimmt gemäß ISO 75A) liegt üblicherweise oberhalb von 80 °C, besonders bevorzugt bei mindestens 150 °C. Die Härte (Kugeldruckhärte) des Thermoplasten sollte mindestens 30 MPa betragen.

Werden als Material für die Kerne thermoplastische Kunststoffe eingesetzt, so erfolgt die Herstellung der Kerne bevorzugt über ein Spritzgußverfahren. Allgemein eignen sich die bekannten Formungsverfahren, wie Kalt- oder Heiß-Pressen, Guß, Druckguß oder spanende Bearbeitung, je nach eingesetztem Material.

Vorteilhafte Materialien für die Kerne sind auch geschäumte Polymere. Hierbei sind thermoplastische Polymere bevorzugt, insbesondere diejenigen, welche sich rückstandsfrei pyrolysieren lassen. Besonders geeignete Polymere sind Polyamide (PA) wie PA 66, Polyimide (PI) wie Polyätherimid (PEI), Polymethylmethacrylimid (PMMI) oder modifiziertes Polymethacrylimid (PMI), Polyoxymethylen (POM) und Polyterephthalate (PETP, PBTP) sowie deren Copolymere. Besonders geeignete Polymerschäume sind PMMI-Schaum und geschäumtes Polystyrol.

Neben den rückstandsfrei bei Temperaturen von mindestens 750 °C pyrolysierenden Polymeren sind auch diejenigen geeignet, die nur teilweise pyrolysiert oder carbonisiert werden, sofern hierbei eine wesentliche (mindestens 50 %) Volumenschwindung stattfindet. Zu diesen Polymeren gehören unter anderem Duroplaste, wie Phenolharze beziehungsweise aus diesen gebildete Hartschäume. Es ist auch möglich, Mischungen von Materialien für die Kerne zu verwenden, von denen ein Teil rückstandsfrei pyrolysiert, und ein anderer Teil bei der Pyrolyse seine ursprüngliche Form soweit verliert, daß er in Form eines losen Pulvers oder unzusammenhängender Körner vorliegt.

Ebenso ist es aber auch möglich, ein locker gebundenes Haufwerk aus Polymerkugeln zu verwenden.

Der gepreßte Körper wird unter Temperatureinwirkung ausgehärtet. Die Härtung kann separat, also nach dem Pressen erfolgen, beispielsweise in einem Ofen. Es ist auch möglich, in einer beheizbaren Presse die Härtung bereits während des Verpressens gleichzeitig mit diesem oder mit einer Verzögerung zu beginnen. Beim Härten in der Form werden weniger Anforderungen an das Zusammenhalten des gepreßten, aber noch ungehärteten Körpers gestellt.

Nach der Härtung wird der verfestigte Grünkörper mitsamt dem Thermoplastkern in den C/C-Zustand (mit Fasern aus Kohlenstoff verstärkter Kohlenstoff, englisch "Carbon Fibre Reinforced Carbon", CFRC) überführt, das heißt carbonisiert. Dies geschieht im allgemeinen durch Erhitzen unter Schutzgas (Stickstoff) oder im Vakuum auf Temperaturen im Bereich von ca. 750 °C bis 1200 °C. Wird auf Temperaturen oberhalb von ca. 1800 °C erhitzt, findet zusätzlich eine Graphitierung des Kohlenstoffs statt.

Nach der Carbonisierung des Grünkörpers werden gegebenenfalls angefallene Pyrolyse-, beziehungsweise Kohlenstoffreste in den gebildeten Hohlräumen beseitigt und es wird ein poröser C/C-Körper mit Hohlräumen oder Ausnehmungen erhalten, der sich weiterverwerten läßt. Er kann nachbearbeitet oder wiederum zu komplexeren Strukturen zusammengesetzt oder geklebt werden.

In einer bevorzugten Ausführungsform des erfindungsgemäßen Verfahrens wird der Kohlenstoff des C/C-Körpers durch eine Schmelzinfiltration mit Metallen und die gegebenenfalls anschließende Wärmebehandlung zumindest teilweise zu den entsprechenden Carbiden umgesetzt. Der Begriff "Metall" schließt im Rahmen der Erfindung neben den üblicherweise so bezeichneten Elementen auch andere carbidbildende Elemente ein, insbesondere Silicium. Bevorzugt ist die Schmelzinfiltration mit Silicium, wobei sich zumindest ein Teil des Kohlenstoffs (bevorzugt der Kohlenstoff in der Matrix) zu Siliciumcarbid umsetzt; die Matrix enthält dann SiC, gegebenenfalls nicht umgesetzten Kohlenstoff sowie gegebenenfalls nicht umgesetztes Silicium. Hierzu wird der C/C-Körper beispielsweise mit Siliciumpulver überschichtet und auf Temperaturen von ca. 1500 bis ca. 1800 °C im Vakuum erhitzt. Je nach beabsichtigter Verwendung ist es dabei nicht zwingend notwendig, den gesamten C/C-Körper in C/SiC umzusetzen, im allgemeinen wird aber zumindest die Randschicht zu C/SiC umgesetzt. Obwohl die Siliciumschmelzinfiltration das bevorzugte Verfahren ist, kann der C/C-Körper auch mit anderen üblichen Verfahren unter Ausbildung der in der Verbundwerkstofftechnologie gängigen Matrices nachverdichtet werden. Insbesondere kann die Schmelzinfiltration auch mit Siliciumlegierungen durchgeführt werden, die unter anderem Metalle wie Chrom, Eisen, Kobalt, Nickel, Titan und/oder Molybdän enthalten können.

Das beschriebene Verfahren kann bevorzugt zur Herstellung von rotationssymmetrischen Körpern wie Bremsscheiben oder Kupplungsscheiben verwendet werden. Die Dicke der aus der Formmasse **B** gebildeten Boden- und Deckschicht (unterhalb bzw. oberhalb der aus der Formmasse **A** gebildeten Kernzone) beträgt nach dem Verpressen vorzugsweise mindestens 7 mm. Diese Boden- und Deckschichten bilden die Reibschichten der Brems- oder Kupplungsscheibe. Die Form der Brems- oder Kupplungsscheibe ist bevorzugt die einer Ringscheibe, d. h., der achsennahe Raum ist durchgehend über die gesamte Dicke der Scheibe leer. Die Form und Anordnung der Kerne ist bevorzugt derart, daß die gebildeten Hohlräume von der Peripherie des zylindrischen Formkörpers bis zum inneren Rand des Formkörpers reichen und damit einen offenen Durchgang zwischen dem inneren und äußeren zylindrischen Rand der Ringscheibe bilden. Hierdurch werden innenbelüftete Brems- oder Kupplungsscheiben mit radialen Lüftungskanälen erzeugt.

### Bezugszeichenliste

- 11, 21, 31, 41: Außenrahmen
- 12, 22, 32, 42: Innenrahmen
- 13, 23: Konturplatte
- 14,24,34,44: Kerne
- 15, 25, 35, 45: Formmasse **A**
- 16, 26, 36, 46: Deckplatte
- 17, 27, 33, 43: Deckplatte
- 18, 18', 28, 28', 38, 38', 48, 48': Formmasse **B**
- 40: Fasern, die in Richtung der Symmetrieachse der Form aufgerichtet werden

## Patentansprüche

1. Verfahren zur Herstellung von Hohlkörpern, umfassend die Schritte
a Einlegen einer Platte in einer Preßform in einen bündig anliegenden Rahmen bestehend aus Innenrahmen (12, 22, 32, 42) und Außenrahmen (11, 21, 31, 41), wobei die Platte eine Konturplatte (13, 23) mit ebener Bodenfläche und strukturierter Oberseite oder eine ebene Platte (33, 43) mit ebener Bodenfläche und Deckfläche ist,
b Einlegen von gegebenenfalls miteinander verbundenen Kernen (14, 24, 34, 44), die die Größe und Gestalt der zu bildenden Hohlräume aufweisen, auf die ebene Deckfläche der Platte (33, 43) oder die strukturierte Oberseite der Konturplatte (13, 23), wobei die Struktur der Oberseite der Konturplatte (13, 23) Vertiefungen aufweist, die der Gestalt der Kerne (14, 24) entsprechen und zumindest 20 % der Höhe der Kerne ausmachen,
c Befüllen der Räume zwischen den Kernen (14, 24, 34, 44) mit einer Formmasse A (15, 25, 35, 45) derart, daß die Räume mindestens bis zur Höhe der oberen Begrenzungsflächen der Kerne gefüllt sind,
d Beschichten der freiliegenden Oberfläche mit weiterer Formmasse B (18, 28, 38, 48) sowie Abdecken der Schicht der Formmasse **B** mit einer bündig in den Rahmen (11, 12; 21, 22; 31, 32; 41, 42) passenden Deckplatte (16, 26, 36, 46) mit ebenen Boden- und Deckflächen,
e Wenden des Gebildes aus dem Schritt d derart, daß die Deckplatte (16, 26, 36, 46) aus Schritt d als Bodenplatte nach unten zu liegen kommt,
f Abheben der Platte (13, 23, 33, 43) aus Schritt a und Beschichten der freiliegenden Fläche mit Formmasse B (18', 28', 38', 48'),
g erneutes Aufsetzen der in Schritt f abgehobenen Deckplatte (33, 43) oder Aufsetzen einer weiteren Deckplatte (17, 27), falls in Schritt a eine Konturplatte (13, 23) eingesetzt wurde, auf die im Schritt f aufgetragene Schicht der Formmasse **B** (18', 28', 38', 48') und Verpressen durch Aufsetzen auf einen Pressentisch und Absenken mindestens eines Preßstempels
h Entformen und Entnehmen des aus Kernen und verdichteten Formmassen bestehenden Preßlings
i thermische Behandlung des Preßlings, bei der das Material der Kerne sich zersetzt oder schmilzt, wobei hohlräume im gepreßten Körper eingeformt werden.

2. Verfahren nach Anspruch 1, **dadurch gekennzeichnet, daß** eine rotationssymmetrische Preßform eingesetzt wird, und daß Innenrahmen (12, 22, 32, 42) und Außenrahmen (11, 21, 31, 41) in der Form von Hohlzylindern ausgebildet sind.

3. Verfahren nach Anspruch 2, **dadurch gekennzeichnet, daß** als Konturplatte (13, 23) eine Kreisringscheibe eingesetzt wird, deren Außendurchmesser dem Innendurchmesser des Außenrahmens (11, 21) entspricht, und deren Innendurchmesser dem Außendurchmesser des Innenrahmens (12, 22) entspricht, und die eine Deckfläche mit Vertiefungen auf der Oberseite aufweist, die der Gestalt der Kerne (14, 24) entsprechen und zumindest 20 % der Höhe der Kerne ausmachen.

4. Verfahren nach Anspruch 2, **dadurch gekennzeichnet, daß** als Deckplatten (17, 27, 33, 43) und als Bodenplatten (16, 26, 36, 46) Kreisringscheiben eingesetzt werden, deren Außendurchmesser dem Innendurchmesser des Außenrahmens (31, 41) entspricht, und deren Innendurchmesser dem Außendurchmesser des Innenrahmens (32, 42) entspricht.

5. Verfahren nach Anspruch 1, **dadurch gekennzeichnet, daß** der so gebildete Preßling bei einer Temperatur von 750 °C bis 1300 °C carbonisiert wird.

6. Verfahren nach Anspruch 5, **dadurch gekennzeichnet, daß** der carbonisierte Preßling anschließend durch eine Schmelzinfiltration mit Metallen zumindest teilweise zu den entsprechenden Carbiden umgesetzt wird.

7. Verfahren nach Anspruch 6, **dadurch gekennzeichnet, daß** eine Schmelzinfiltration mit Silicium bei Temperaturen von ca. 1500 °C bis ca. 1800 °C durchgeführt wird, wobei sich zumindest ein Teil des Kohlenstoffs zu Siliciumcarbid umsetzt, wobei die so gebildete Matrix SiC, gegebenenfalls nicht umgesetzten Kohlenstoff sowie gegebenenfalls nicht umgesetztes Silicium enthält.

8. Verfahren nach Anspruch 7, **dadurch gekennzeichnet, daß** die Schmelzinfiltration mit einer Siliciumlegierung durchgeführt wird, die Metalle ausgewählt aus Chrom, Eisen, Kobalt, Nickel, Titan und Molybdän enthält.

## Claims

1. A process for making hollow articles, comprising the steps of
a placing a plate in a press mould, in a flush-fitting frame comprising an inner frame (12, 22, 32, 42) and an outer frame (11, 21, 31, 41), the plate being a contour plate (13, 23) with a planar bottom area and a structured upper side or a planar plate (33, 43) with a planar bottom area and top area,
b placing cores (14, 24, 34, 44), which are possibly connected to one another and which are of the size and shape of the cavities to be formed, onto the planar top area of the plate (33, 43) or the structured upper side of the contour plate (13, 23), the structure of the upper side of the contour plate (13, 23) having depressions which correspond to the shape of the cores (14, 24) and make up at least 20% of the height of the cores,
c filling the spaces between the cores (14, 24, 34, 44) with a moulding compound A (15, 25, 35, 45) in such a way that the spaces are filled at least up to the height of the upper delimiting areas of the cores,
d coating the exposed surface with further moulding compound B (18, 28, 38, 48) and covering the layer of moulding compound B with a top plate (16, 26, 36, 46) which fits flush into the frame (11, 12; 21, 22; 31, 32; 41, 42) and has planar bottom and top areas,
e turning over the formation from step d in such a way that the top plate (16, 26, 36, 46) from step d comes to lie downward as the bottom plate,
f lifting off the plate (13, 23, 33, 43) from step a and coating the exposed area with moulding compound B (18', 28', 38', 48'),
g once again placing the top plate (33, 43) lifted off in step f or, if a contour plate (13, 23) was used in step a, placing a further top plate (17, 27) onto the layer of moulding compound B (18', 28', 38', 48') applied in step f and pressing by placing onto a press table and lowering at least one pressing die,
h demoulding and removing the pressed article comprising cores and compacted moulding compounds,
i thermal treatment of the pressed article, in which the material of the cores disintegrates or melts, thereby creating cavities in the pressed article.

2. The process as claimed in claim 1, wherein a rotationally symmetrical press mould is used, and wherein the inner frame (12, 22, 32, 42) and the outer frame (11, 21, 31, 41) take the form of hollow cylinders.

3. The process as claimed in claim 2, wherein an annular disk whose outside diameter corresponds to the inside diameter of the outer frame (11, 21) and whose inside diameter corresponds to the outside diameter of the inner frame (12, 22) and which has a top area with depressions on the upper side which correspond to the shape of the cores (14, 24) and make up at least 20 % of the height of the cores is used as the contour plate (13, 23).

4. The process as claimed in claim 2, wherein annular disks whose outside diameter corresponds to the inside diameter of the outer frame (31, 41) and whose inside diameter corresponds to the outside diameter of the inner frame (32, 42) are used as top plates (17, 27, 33, 43) and as bottom plates (16, 26, 36, 46).

5. The process as claimed in claim 1, wherein the pressed article formed in this way is carbonised at a temperature of 750 °C to 1300 °C.

6. The process as claimed in claim 5, wherein the carbonised pressed article is subsequently converted at least partially into the corresponding carbides by melt infiltration with metals.

7. The process as claimed in claim 6, wherein melt infiltration with silicon is carried out at temperatures from about 1500 °C to about 1800 °C, at least part of the carbon being converted into silicon carbide, the SiC matrix formed in this way containing possibly unconverted carbon and possibly unconverted silicon.

8. The process as claimed in claim 7, wherein the melt infiltration is carried out with a silicon alloy which contains metals selected from chromium, iron, cobalt, nickel, titanium and molybdenum.

## Revendications

1. Procédé pour la fabrication de corps creux, comprenant les étapes suivantes :
a. introduction d'une plaque dans un moule dans un cadre arrivant en affleurement comprenant cadre intérieur (12, 22, 32, 42) et cadre extérieur (11, 21, 31, 41), la plaque étant une plaque à contour (13, 23) avec une surface de sol plane et un côté supérieur structuré ou une plaque (33, 43) plane avec une surface de sol plane et une surface de couverture,
b. insertion de noyaux (14, 24, 34, 44) reliés éventuellement entre eux, qui présentent la grandeur et la forme des cavités à former, sur la surface de couverture plane de la plaque (33, 43) ou le côté supérieur structurée de la plaque à contour (13, 23), la structure du côté supérieur de la plaque à contour (13, 23) présentant des cavités qui correspondent à la forme des noyaux (14, 24) et représentent au moins 20 % de la hauteur des noyaux,
c. remplissage des espaces entre les noyaux (14, 24, 34, 44) avec une masse de moulage A (15, 25, 35, 45) de telle sorte que les espaces sont remplis au moins jusqu'à la hauteur des surfaces de délimitation supérieures des noyaux,
d. revêtement de la surface dégagée avec une autre masse de moulage B (18, 28, 38, 48) et recouvrement de la couche de masse de moulage B avec une plaque de couverture (16, 26, 36, 46) s'insérant en affleurement dans le cadre (11, 12 ; 21, 22 ; 31, 32 ; 41, 42) avec des surfaces de sol et de couverture planes,
e. renversement du produit provenant de l'étape d, de telle sorte que la plaque de couverture (16, 26, 36, 46) provenant de l'étape d est disposée vers le bas sous forme de plaque de sol,
f. soulèvement de la plaque (13, 23, 33, 43) provenant de l'étape a et revêtement de la surface dégagée avec de la masse de moulage B (18', 28', 38', 48'),
g. nouvelle pose de la plaque de couverture (33, 43) soulevée à l'étape f ou pose d'une autre plaque de couverture (17, 27), dans le cas où, à l'étape a, une plaque à contour (13, 23) a été utilisée, sur la couche, appliquée à l'étape f, de la masse de moulage B (18', 28', 38', 48') et pressage par pose sur un plateau de presse et abaissement d'au moins un piston de presse,
h. démoulage et prélèvement de la pièce moulée composée de noyaux et de masses de moulage compactées.
i. traitement thermique de l'objet moulé, lors duquel le matériau des noyaux se décompose ou fond, des cavités étant moulées dans le corps pressé.

2. Procédé selon la revendication 1, **caractérisé en ce qu'**un moule à symétrie de rotation est utilisé et **en ce que** des cadres intérieurs (12, 22, 32, 42) et des cadres extérieurs (11, 21, 31, 41) sont réalisés sous la forme de cylindres creux.

3. Procédé selon la revendication 2, **caractérisé en ce qu'**un disque annulaire circulaire est utilisé comme plaque à contour (13, 23), disque dont le diamètre extérieur correspond au diamètre intérieur du cadre extérieur (11, 21) et dont le diamètre intérieur correspond au diamètre extérieur du cadre intérieur (12, 22), et qui présente une surface de couverture avec des cavités sur le côté supérieur, qui correspondent à la forme des noyaux (14, 24) et représentent au moins 20 % de la hauteur des noyaux.

4. Procédé selon la revendication 2, **caractérisé en ce que** des disques annulaires circulaires sont utilisés comme plaques de couverture (17, 27, 33, 43) et comme plaques de sol (16, 26, 36, 46), disques dont le diamètre extérieur correspond au diamètre intérieur du cadre extérieur (31, 41), et dont le diamètre intérieur correspond au diamètre extérieur du cadre intérieur (32, 42).

5. Procédé selon la revendication 1, **caractérisé en ce que** l'objet moulé ainsi formé est carbonisé à une température allant de 750°C à 1300°C.

6. Procédé selon la revendication 5, **caractérisé en ce que** l'objet moulé carbonisé est transformé ensuite par une infiltration de fusion avec des métaux au moins en partie dans les carbures correspondants.

7. Procédé selon la revendication 6, **caractérisé en ce qu'**une infiltration de fusion est effectuée avec du silicium à des températures allant d'environ 1500°C jusqu'à environ 1800°C, au moins une partie du carbone se convertissant en carbure de silicium, la matrice SiC ainsi formée contenant éventuellement du carbone non transformé et éventuellement du silicium non transformé.

8. Procédé selon la revendication 7, **caractérisé en ce que** l'infiltration de fusion est effectuée avec un alliage de silicium, qui contient des métaux sélectionnés parmi les éléments suivants : chrome, fer, cobalt, nickel, titane et molybdène.
